# EUROPEAN PATENT SPECIFICATION

(11) **EP 2 773 156 B1**
(45) Date of publication and mention of the grant of the patent: **09.01.2019**
(21) Application number: 12843646.6
(22) Date of filing: 29.10.2012
(51) Int. Cl.: H04W 64/00, G01S 3/04, G01S 5/02

(54) **USER EQUIPMENT POSITIONING METHOD AND POSITIONING SERVER**
POSITIONIERUNGSVERFAHREN FÜR BENUTZERGERÄTE UND POSITIONIERUNGSSERVER
PROCÉDÉ DE POSITIONNEMENT D'ÉQUIPEMENT UTILISATEUR ET SERVEUR DE POSITIONNEMENT

(30) Priority: 27.10.2011 CN 201110331353
(43) Date of publication of application: 03.09.2014
(73) Proprietor: Huawei Technologies Co., Ltd., Longgang District Shenzhen, Guangdong 518129 (CN)
(72) Inventor: CUI, Jie, Shenzhen Guangdong 518129 (CN); XIAO, Dengkun, Shenzhen Guangdong 518129 (CN); WU, Tong, Shenzhen Guangdong 518129 (CN)
(74) Representative: Pfenning, Meinig & Partner mbB
(86) International application number: PCT/CN2012/083651
(87) International publication number: WO 2013/060297

(56) References cited:
- WO-A1-00/69198
- WO-A1-2010/026503
- CN-A- 1 787 679
- CN-A- 102 111 204
- KR-B1- 100 782 087
- US-A1- 2011 053 613
- YU K ET AL: "Anchor Global Position Accuracy Enhancement Based on Data Fusion", IEEE TRANSACTIONS ON VEHICULAR TECHNOLOGY, IEEE SERVICE CENTER, PISCATAWAY, NJ, US, vol. 58, no. 3, 1 March 2009 (2009-03-01), pages 1616-1623, XP011247727, ISSN: 0018-9545

## Description

### TECHNICAL FIELD

The present invention relates to the field of wireless positioning technologies, and in particular, to a method for positioning a user equipment and a positioning server.

### BACKGROUND

With fast social and economic development, a range of people's activities becomes wider, and "location information" becomes increasingly important information in people's life. For example, when coming to an alien environment, people need the location information to provide themselves navigation; in the case of an emergency, a rescuer needs the location information of a rescuee to quickly come to the scene for aid.

Development of a GPS (Global Positioning System, Global Positioning System) positioning technology enables a user equipment with a GPS positioning module to acquire relatively precise location information. However, addition of the GPS module increases a cost price of the user equipment; further, a GPS signal is easily influenced by a skyscraper, making the GPS positioning technology not very suitable for an urban environment full of skyscrapers.

In the prior art, a CID (Cell Identification, cell) positioning technology may implement positioning of a user equipment in the urban environment full of buildings, and the CID positioning technology is widely used in various mobile networks. Its principle is to acquire an ID of a cellular cell in which a target user equipment is located, so as to determine a location of the user equipment. If the cell is an omnidirectional cell, the location of the user equipment is within a circle centered around a serving base station and with a cell coverage radius as the radius; if the cell is sectorized, a coverage range of a certain sector in which the user equipment is located may further be determined.

As can be known from above, positioning precision of the CID positioning technology is relatively low; generally, only the circle with the cell coverage radius in which the user equipment is located or the coverage range of the sector in which the user equipment is located can be positioned, and information about a height at which the user equipment is located cannot be represented.

Yu et al. in their paper "Anchor Global Position Enhancement based on Data Fusion" published in: IEEE Transactions on Vehicular Technology, vol. 58, no. 3, pages 1616-1623, describe that the location information of sensor nodes in wireless sensor networks is crucial for various applications such as emergency rescue operations, environmental monitoring, home automation, and traffic control. They propose a new method to improve the anchor location accuracy in wireless sensor networks based on fusion of Global Positioning System (GPS) measurements and anchor-to-anchor parameter estimates. Novel algorithms are derived to increase the accuracy of anchor locations using both anchor-to-anchor distance and angle-of-arrival (AOA) estimates for both line-of-sight (LOS) and non-LOS (NLOS) scenarios. When using anchor-to-anchor distance estimates in LOS conditions, an optimization-based algorithm is developed. The Cramer-Rao lower bound (CRLB) is derived to benchmark positioning accuracy in 3-D environments with both GPS measurements and anchor-to-anchor parameter estimates, which has not been studied in the literature. Simulation results demonstrate that the proposed algorithms can substantially improve anchor position accuracy, and the performance of the proposed algorithms approaches the CLRB.

WO 00/69198 A1 describes a wireless location system that uses a statistical approach, in which a probability distribution is trained that relates reliable observations of a signal parameter to a known measure of location. The probability distribution is then used to locate a mobile transmitter when addition observations are available. Various precise wireless location techniques may be used to train the distribution or may be used alone to locate the mobile transmitter. In one wireless location technique, a wireless location algorithm uses weighted observations, where the observations are weighted with received signal strength.

US 2011/0053613A discloses sending, by a mobile station, to a serving base station a system basic capability request signaling carrying the location capability supported by the mobile station; and sending, by the serving base station, to the mobile station a system basic capability response signaling carrying the location capability supported by the serving base station after receiving the system basic capability request signaling.

### SUMMARY

The present invention is as defined in the appended independent claims. To resolve a problem of accurately positioning a location of a user equipment in an urban environment full of skyscrapers, embodiments of the present invention provide a method for positioning the user equipment and a positioning server.

Positioning can be performed to obtain three-dimensional location information of a user equipment by implementing a technical solution where a round trip time and information about an angle of arrival of the user equipment relative to a serving base station that serves the user equipment are acquired and positioning is performed to obtain the three-dimensional location information of the user equipment according to the round trip time and the information about the angle of arrival, so as to resolve a problem of accurately positioning a location of the user equipment in an urban environment full of skyscrapers.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for positioning a user equipment provided in Embodiment 1 of the present invention;
FIG. 2 is a schematic diagram of an AAS system provided in Embodiment 2 of the present invention;
FIG. 3 is a schematic diagram of a vertical AOA and a horizontal AOA of a user equipment relative to a serving base station provided in Embodiment 2 of the present invention;
FIG. 4 is a flowchart of a method for positioning a user equipment provided in Embodiment 2 of the present invention;
FIG. 5 is a schematic diagram of content of an E-CID MEASUREMENT INITIATION REQUEST instruction provided in Embodiment 2 of the present invention;
FIG. 6 is a schematic diagram of content of a vertical angle-of-arrival mapping table provided in Embodiment 2 of the present invention;
FIG. 7 is a schematic diagram of content of LPPa signaling in a measurement result reported by a base station provided in Embodiment 2 of the present invention;
FIG. 8 is an example diagram of a three-dimensional space coordinate system provided in Embodiment 2 of the present invention;
FIG. 9 is an example diagram of calibrating location information of a user equipment provided in Embodiment 2 of the present invention;
FIG. 10 is an example diagram of calibrating location information of a user equipment provided in Embodiment 2 of the present invention;
FIG. 11 is a block diagram of a positioning server provided in Embodiment 3 of the present invention;
FIG. 12 is a block diagram of a positioning server provided in Embodiment 3 of the present invention;
FIG. 13 is a block diagram of a positioning server provided in Embodiment 3 of the present invention; and
FIG. 14 is a block diagram of a positioning server provided in Embodiment 3 of the present invention.

### DESCRIPTION OF EMBODIMENTS

To make the objectives, technical solutions, and advantages of the present invention more comprehensible, the following further describes the embodiments of the present invention in detail with reference to the accompanying drawings.

### Embodiment 1

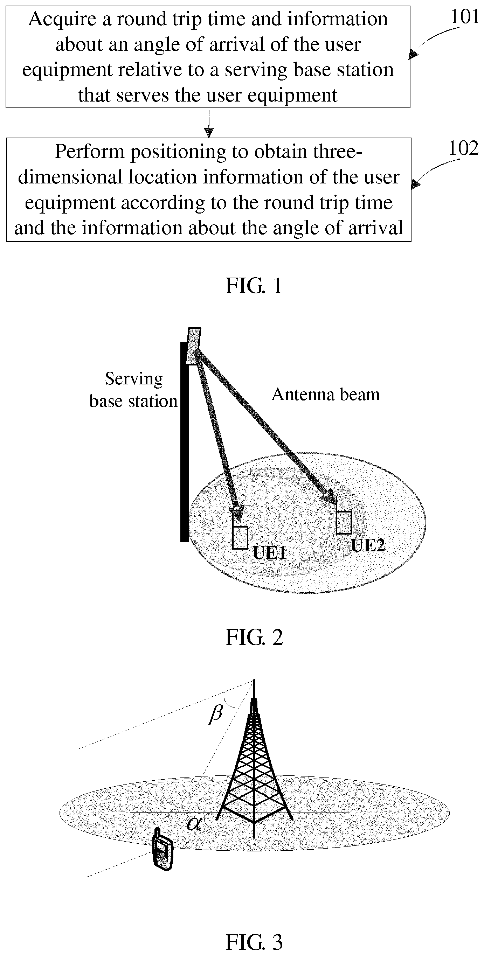

FIG. 1 shows a method for positioning a user equipment. The method specifically includes the following steps:
Step 101: Acquire a round trip time and information about an angle of arrival of the user equipment relative to a serving base station that serves the user equipment, where the information about the angle of arrival includes information about a horizontal angle of arrival and information about a vertical angle of arrival.
Step 102: Perform positioning to obtain three-dimensional location information of the user equipment according to the round trip time and the information about the angle of arrival.

Positioning can be performed to obtain three-dimensional location information of a user equipment by implementing a technical solution where a round trip time and information about an angle of arrival of the user equipment relative to a serving base station that serves the user equipment are acquired and positioning is performed to obtain the three-dimensional location information of the user equipment according to the round trip time and the information about the angle of arrival, thereby improving precision in positioning the user equipment and resolving a problem of accurately positioning the location of the user equipment in an urban environment full of skyscrapers.

### Embodiment 2

FIG. 2 shows an AAS (Advanced Antenna System, advanced antenna system) provided in this embodiment of the present invention. The AAS is capable of adaptively adjusting an antenna pattern by using multiple antenna array elements (including horizontal array elements and vertical array elements) and beamforming an antenna beam in a horizontal direction and a vertical direction. In this embodiment of the present invention, this beamforming capability of the AAS is called a three-dimensional spatial forming capability of the AAS. The three-dimensional spatial forming capability of the AAS may aim the antenna beam at a user equipment, so as to provide a better data transmission service for the user equipment.

In this embodiment of the present invention, when a base station has the three-dimensional spatial forming capability of the AAS, the base station may estimate a vertical AOA and a horizontal AOA of the user equipment relative to the base station. FIG. 3 is a schematic diagram of a vertical AOA (Angle of Arrival, angle of arrival) and a horizontal AOA of a user equipment relative to a serving base station provided in this embodiment of the present invention, where the vertical AOA means an included angle between an antenna beam and a vertical reference line, and the horizontal AOA means an included angle between an antenna beam and a horizontal reference line. As shown in FIG. 3, an angle α represents the horizontal AOA of the user equipment relative to the serving base station, and an angle β represents the vertical AOA of the user equipment relative to the serving base station.

As can be seen from FIG. 3, the vertical AOA and the horizontal AOA of the user equipment relative to the base station are closely related to location information of the user equipment. In a situation in which the vertical AOA and the horizontal AOA of the user equipment relative to the serving base station can be estimated and so can a spatial distance between the user equipment and the serving base station, relatively accurate three-dimensional location information of the user equipment in three-dimensional space may be determined.

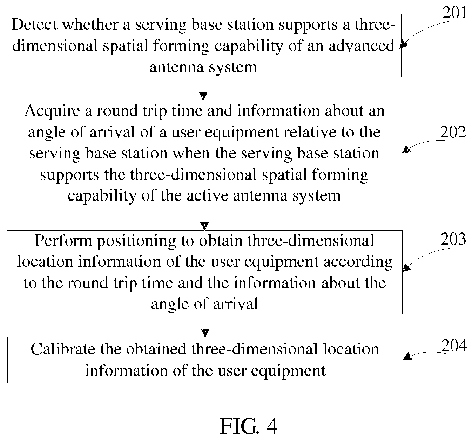

Referring to FIG. 4, the following describes in detail, in combination with the specific embodiment, a method for positioning a user equipment provided in this embodiment of the present invention. The method is executed by a positioning server, where the positioning server is located in an upper-layer management system of a base station. Specifically, the following steps are included:
Step 201: The positioning server detects whether a serving base station that serves the user equipment supports a three-dimensional spatial forming capability of an AAS;
if the serving base station that serves the user equipment supports the three-dimensional spatial forming capability of the AAS, execute step 202; or
if the serving base station that serves the user equipment does not support the three-dimensional spatial forming capability of the AAS, terminate the operation process.

A specific implementation process of this step is as follows:
Step 201-1: The positioning server delivers a query message to the serving base station to query whether the serving base station supports the three-dimensional spatial forming capability of the AAS.

The query message that the positioning server delivers to the serving base station to query whether the serving base station supports the three-dimensional spatial forming capability of the AAS may be specifically an LPPa (LTE Positioning Protocol A, Long Term Evolution Positioning Protocol A) message.

Specifically, a format of the LPPa message that the positioning server delivers to the serving base station to query whether the serving base station supports the three-dimensional spatial forming capability of the AAS may be shown as follows:

```
 -- ASN1START//Start
 RequesteNBCapabilities-r9-IEs::= SEQUENCE {
  aas-RequestCapabilities AAS-RequestCapabilities OPTIONAL, ...
 }
 -- ASN1STOP//End
```

where AAS-RequestCapabilities is a 1-bit indicator, used to represent that the positioning server queries whether the base station supports a three-dimensional spatial forming capability of the AAS; for example, when a value of AAS-RequestCapabilities is 1, it means that the positioning server wants to know whether the base station supports the AAS. Accordingly, upon receiving AAS-RequestCapabilities whose value is 1, the base station must return its own AAS capability.

Step 201-2: After receiving the query message, the serving base station feeds back to the positioning server whether the serving base station supports the three-dimensional spatial forming capability of the AAS.

Specifically, the serving base station returns a query response message to the positioning server, where the query response message feeds back whether the base station supports the three-dimensional spatial forming capability of the AAS, and the query response message may be specifically an LPPa message.

For example, a format of an LPPa message that the serving base station returns to feed back whether the base station supports the three-dimensional spatial forming capability of the AAS may be shown as follows:

```
 -- ASN1START//Start
 ProvideeNBCapabilities-r9-IEs::= SEQUENCE {
 aas-ProvideCapabilities AAS-ProvideCapabilities OPTIONAL, -- Need ON ...
 }
 -- ASN1STOP//END
```

where AAS-ProvideCapabilities is a 1-bit indicator, used to represent whether the base station supports the three-dimensional spatial forming capability of the AAS; for example, when a value of AAS-ProvideCapabilities is 1, it means that the base station supports the three-dimensional spatial capability of the AAS.

Step 201-3: The positioning server receives the query response message returned by the serving base station and obtains from the query response message whether the base station supports the three-dimensional spatial forming capability of the AAS.

It should be noted that step 201 is an optional step. In specific implementation, the positioning server may directly configure the serving base station to measure a horizontal angle of arrival and a vertical angle of arrival of the user equipment relative to the serving base station. When supporting the three-dimensional spatial forming capability of the AAS, the serving base station may measure the horizontal angle of arrival and the vertical angle of arrival of the user equipment relative to the serving base station according to the configuration of the positioning server, and report the measured horizontal angle of arrival and vertical angle of arrival of the user equipment relative to the serving base station to the positioning server.

Step 202: The positioning server acquires a round trip time and information about an angle of arrival of the user equipment relative to the serving base station, where the round trip time means double a transmission time in one-way propagation of a signal between the user equipment and the serving base station, and the information about the angle of arrival includes information about the horizontal angle of arrival and information about the vertical angle of arrival.

Acquiring, by the positioning server, the round trip time of the user equipment relative to the serving base station may be implemented in the following manners:
Manner 1: The positioning server configures the user equipment to measure the round trip time and receives the round trip time reported by the user equipment.

In specific implementation, for a CDMA (Code Division Multiple Access, Code Division Multiple Access) mobile communications system, the positioning server may acquire the round trip time in manner 1. A specific implementation process may be described as follows: The positioning server delivers LPP (LTE Positioning Protocol, Long Term Evolution Positioning Protocol) signaling to the user equipment to inform the user equipment of measuring the round trip time; after receiving a measurement notification in the LPP signaling, the user equipment measures the round trip time and reports the measured round trip time to the positioning server by using LPP signaling; the positioning server receives the round trip time reported by the user equipment.

Manner 2: The positioning server configures the user equipment to measure a first time difference in transceiving data between the user equipment and the serving base station; configures the serving base station to measure a second time difference in transceiving data between the serving base station and the user equipment; receives the first time difference reported by the user equipment and the second time difference reported by the serving base station; and adds the received first time difference and the received second time difference to obtain the round trip time.

In specific implementation, for an LTE (Long Term Evolution, Long Term Evolution) system, the positioning server may acquire the round trip time of the user equipment by using the method described in manner 2, where measurement of a first time difference by the user equipment and measurement of a second time difference by the serving base station may be implemented by using an existing time difference measurement technology.

Acquiring, by the positioning server, the information about the angle of arrival of the user equipment relative to the serving base station that serves the user equipment includes the following steps:
Step A: Configure the serving base station to measure the horizontal angle of arrival and the vertical angle of arrival of the user equipment relative to the serving base station.

Specifically, configuring the serving base station to measure the horizontal angle of arrival and the vertical angle of arrival of the user equipment relative to the serving base station includes: the positioning server informs, by configuring LPPa signaling, the serving base station of measuring the information about the angle of arrival, where the LPPa signaling configured by the positioning server may be specifically an E-CID MEASUREMENT INITIATION REQUEST (E-CID measurement initiation request) instruction, and the E-CID MEASUREMENT INITIATION REQUEST instruction is used to initialize measurement information that the serving base station needs to measure.

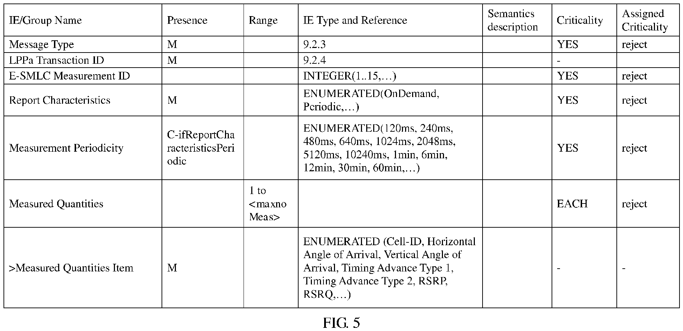

Information included in the E-CID MEASUREMENT INITIATION REQUEST instruction is shown in FIG. 5. Measured Quantities (Measured Quantities) in FIG. 5 is used to notify the serving base station of measurement content that the serving base station needs to report when feeding back the measurement information. In this embodiment of the present invention, the Measured Quantities include the Horizontal Angle of Arrival (horizontal angle of arrival) and the Vertical Angle of Arrival (vertical angle of arrival).

Step B: Receive information about the horizontal angle of arrival, where the information is obtained by the serving base station by searching a table of horizontal angle of arrival information according to a measured value of the horizontal angle of arrival and reported by the serving base station, and receive information about the vertical angle of arrival, where the information is obtained by the serving base station by searching a table of vertical angle of arrival information according to a measured value of the vertical angle of arrival and reported by the serving base station.

In this embodiment of the present invention, the serving base station respectively stores the table of horizontal angle of arrival information and the table of vertical angle of arrival information in advance, where the table of horizontal angle of arrival information includes mapping between angle of arrival information of the horizontal angle of arrival and a measured value of the horizontal angle of arrival; and the table of vertical angle of arrival information includes mapping between angle of arrival information of the vertical angle of arrival and a measured value of the vertical angle of arrival.

It should be noted that a range of the measured value of the vertical angle of arrival in the table of vertical angle of arrival information is generally 1° to 90° or 0° to 180°, is generally determined according to a location of the user equipment relative to its serving base station, and is not specifically limited in this embodiment of the present invention.

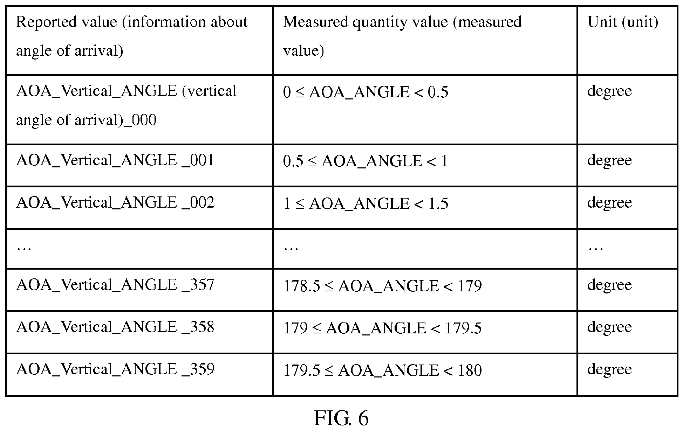

Content of the table of vertical angle of arrival information may be shown in FIG. 6; content of the table of horizontal angle of arrival information is similar to a format of the table of vertical angle of arrival information, and details are not described herein again.

In this case, after measuring the horizontal angle of arrival and the vertical angle of arrival, the serving base station may search the table of horizontal angle of arrival information according to the measured value of the horizontal angle of arrival to obtain the information about the horizontal angle of arrival, search the table of vertical angle of arrival information according to the measured value of the vertical angle of arrival to obtain the information about the vertical angle of arrival, and report the found information about the horizontal angle of arrival and the found information about the vertical angle of arrival to the positioning server.

For example, upon obtaining, through measurement, that the vertical angle of arrival of the user equipment is 0.8°, the serving base station searches the table of vertical angle of arrival information to obtain that the information about the vertical angle of arrival that needs to be reported is AOA_Vertical_ANGLE_001.

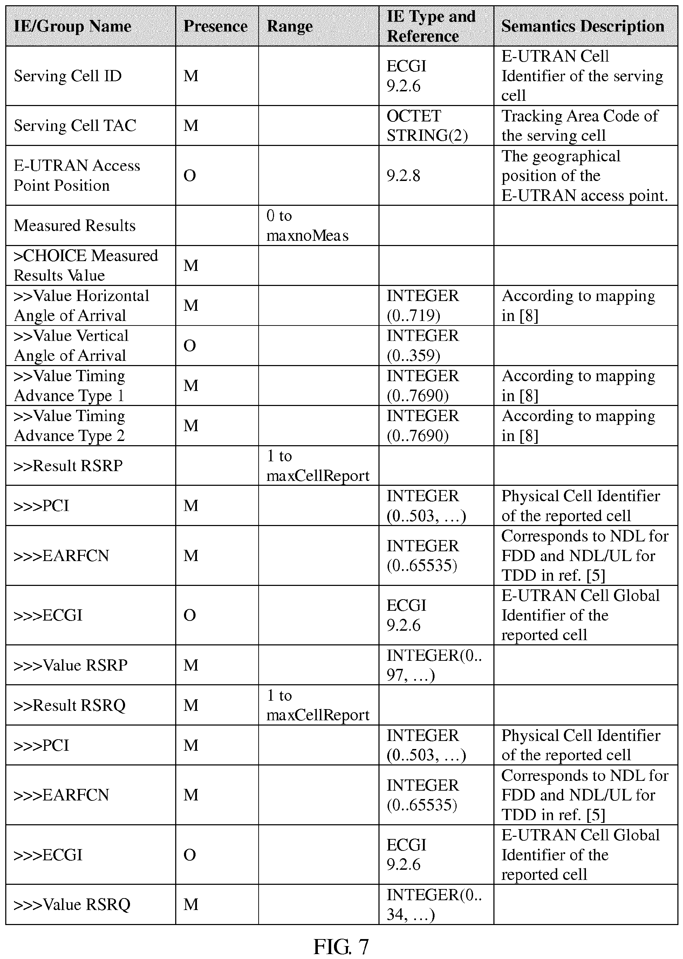

In specific implementation, the serving base station reports the measurement information to the positioning server by using LPPa signaling; content of the reported LPPa signaling may be shown in FIG. 7. In this embodiment of the present invention, the content that needs to be reported by the serving base station includes Value Horizontal Angle of Arriva (horizontal angle of arrival) and Value Vertical Angle of Arrival (vertical angle of arrival).

In this embodiment of the present invention, a signaling interaction process for the positioning server to acquire the round trip time and the information about the angle of arrival of the user equipment relative to the serving base station that serves the user equipment may be specifically shown as follows:
MeasuredResultsValue::= CHOICE {
valueHorizontalAngleOfArrival INTEGER (0,719) //Information about the horizontal angle of arrival that is measured and needs to be reported by the base station, ranging from 0-719 (0° to 360° at a step of 0.5°)
valueVerticalAngleOfArrival INTEGER (0,359) //Information about the vertical angle of arrival that is measured and needs to be reported by the base station, ranging from 0-359 (0° to 180° at a step of 0.5°)
TimingAdvanceType1 INTEGER (0,7690) //Represents a time advancement value of type 1, that is, a time difference of the UE's (Rx-Tx) plus a time difference of the base station's (Rx-Tx), ranging from 0-7690
valueTimingAdvanceType2 INTEGER (0,7690) //Represents a time advancement value of type 2, that is, a time difference of the base station's (Rx-Tx), ranging from 0-7690
resultRSRP ResultRSRP //Reference signal received power measured by the base station
resultRSRQ ResultRSRQ //Reference signal received quality measured by the base station ... }

In this embodiment of the present invention, measurement of the angle of arrival and measurement of the round trip time may be implemented by using an existing measurement technology.

Step 203: The positioning server obtains three-dimensional location information of the user equipment according to the acquired round trip time and the information about the angle of arrival.

This step specifically includes the following operations:
Step 203-1: Establish a three-dimensional space coordinate system centered around a location of the serving base station.
Step 203-2: Calculate a spatial distance between the user equipment and the serving base station according to the round trip time and a speed of signal propagation.

Specifically, the spatial distance between the user equipment and the serving base station may be calculated by using the following formula: Spatial distance = ½*Round trip time*C, where C is the speed of signal propagation.

Step 203-3: Calculate horizontal location information of the user equipment in the three-dimensional space coordinate system according to the spatial distance and the information about the horizontal angle of arrival, and calculate vertical location information of the user equipment in the three-dimensional space coordinate system according to the spatial distance and the information about the vertical angle of arrival.

Specifically, the horizontal location information of the user equipment in the three-dimensional space coordinate system may be calculated according to the spatial distance and the information about the horizontal angle of arrival by using a trigonometric function, and similarly, the vertical location information of the user equipment in the three-dimensional space coordinate system may be calculated according to the spatial distance and the information about the vertical angle of arrival by using a trigonometric function.

In this embodiment of the present invention, the positioning server stores a table of horizontal angle of arrival information that is the same as the table of horizontal angle of arrival information on the serving base station side; therefore, the positioning server may search, according to the acquired information about the horizontal angle of arrival, the table of horizontal angle of arrival information to obtain the horizontal angle of arrival corresponding to the information about the horizontal angle of arrival; and afterwards, calculate the horizontal location information of the user equipment in the three-dimensional space coordinate system according to the spatial distance and the found horizontal angle of arrival by using a trigonometric function. Similarly, the positioning server stores the table of vertical angle of arrival information that is the same as he table of horizontal angle of arrival information on the serving base station side; therefore, the positioning server may search, according to the acquired information about the vertical angle of arrival, the table of vertical angle of arrival information to obtain the vertical angle of arrival corresponding to the information about the vertical angle of arrival; and afterwards, calculate the vertical location information of the user equipment in the three-dimensional space coordinate system according to the spatial distance and the found vertical angle of arrival by using a trigonometric function.

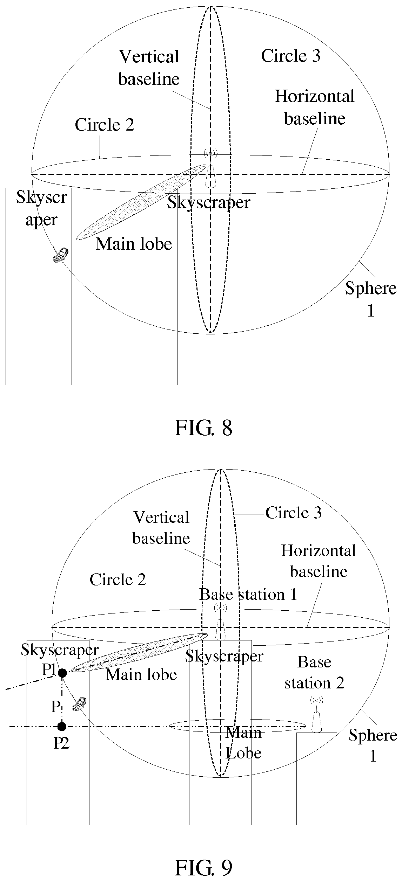

The following uses an example to describe an implementation process of steps 202 to 203:
For a three-dimensional space coordinate system provided in this embodiment of the present invention, reference may be made to FIG. 8. In an urban environment full of skyscrapers, a base station on a roof needs to provide a positioning service for a user equipment in another building; a three-dimensional space coordinate system centered around the base station is established; the positioning server may obtain a spatial distance between the user equipment and the base station according to a round trip time and a speed of signal propagation; in terms of the three-dimensional space coordinate system, the user equipment is located in a sphere centered around the center of the three-dimensional space coordinate system and with the spatial distance as the radius; in a situation in which information about an angle of arrival of the user equipment relative to the serving base station is obtained, specific three-dimensional location information of the user equipment in the sphere may be calculated according to the spatial distance and the information about the angle of arrival by using a trigonometric function.

Positioning can be performed to obtain three-dimensional location information of a user equipment by implementing a technical solution where a round trip time and information about an angle of arrival of the user equipment relative to a serving base station that serves the user equipment are acquired and positioning is performed to obtain the three-dimensional location information of the user equipment according to the round trip time and the information about the angle of arrival, so as to resolve a problem of accurately positioning the location of the user equipment in an urban environment full of skyscrapers.

Further and preferably, because a certain error, such as a measurement error, exists in the acquired round trip time and the information about the angle of arrival, a certain error may exist in the three-dimensional location information of the user equipment obtained according to the acquired round trip time and the information about the angle of arrival. In this embodiment of the present invention, to further ensure accuracy in performing positioning to obtain user location information, the three-dimensional location information obtained by positioning the user equipment for the first time is calibrated. For a specific calibration process, reference may be made to the content described in step 204.

Step 204: The positioning server calibrates the obtained three-dimensional location information of the user equipment.

This step includes the following operations:
Step 204-1: The positioning server determines one or more reference base stations.

Specifically, determining one or more reference base stations includes:
detecting whether a neighboring base station of the serving base station supports the three-dimensional spatial forming capability of the active antenna system; and using one or more neighboring base stations that support the three-dimensional spatial forming capability of the active antenna system as a reference base station.

A method for detecting whether a neighboring base station of the serving base station supports the three-dimensional spatial forming capability of the active antenna system is the same as the method for detecting whether the serving base station supports the three-dimensional spatial forming capability of the active antenna system described in step 201. Details are not described herein again.

Step 204-2: The positioning server respectively acquires information about an angle of arrival of the user equipment relative to each reference base station, and respectively determines a calibration baseline corresponding to information about the angle of arrival of the user equipment relative to each reference base station.

In this embodiment of the present invention, a direction of an angle of arrival corresponding to the acquired information about the angle of arrival is used as the calibration baseline corresponding to the information about the angle of arrival.

A method for respectively acquiring, by the positioning server, the information about the angle of arrival of the user equipment relative to each reference base station is the same as the method for acquiring, by the positioning server, the information about the angle of arrival of the user equipment relative to the serving base station described in step 202. Details are not described herein again.

Step 204-3: The positioning server calibrates the three-dimensional location information of the user equipment according to each calibration baseline and uses three-dimensional location information obtained after the calibration as new three-dimensional location information of the user equipment.

Specifically, when there is one calibration baseline, the calibrating the three-dimensional location information of the user equipment according to each determined calibration baseline and using three-dimensional location information obtained after the calibration as new three-dimensional location information of the user equipment includes:
projecting a location point corresponding to the three-dimensional location information to the calibration baseline to obtain a calibration point; and
acquiring three-dimensional location information of a midpoint, in the three-dimensional space coordinate system, of a line that connects the location point corresponding to the three-dimensional location information and the calibration point as the new three-dimensional location information of the user equipment.

When there are N calibration baselines, where N is a natural number greater than or equal to 2, the calibrating the three-dimensional location information of the user equipment according to each calibration baseline and using three-dimensional location information obtained after the calibration as new three-dimensional location information of the user equipment includes:
using a location point corresponding to the three-dimensional location information as a first calibration point and performing the following operations:
projecting the first calibration point to an i^{th} calibration baseline to obtain a current second calibration point, where an initial value of i is 1; and
acquiring a midpoint of a line connecting the first calibration point and the current second calibration point as a current first calibration point, increasing i by 1, returning to projecting the first calibration point to an i^{th} calibration baseline to obtain a current second calibration point, acquiring a midpoint of a line connecting the first calibration point and the current second calibration point as a current first calibration point, increasing i by 1 until i is greater than N, and using three-dimensional location information of the current first calibration point in the three-dimensional space coordinate system as the new three-dimensional location information of the user equipment.

An error of three-dimensional location information of a user equipment is calibrated by a positioning server by implementing a technical solution where one or more reference base stations are determined, information about an angle of arrival of the user equipment relative to each reference base station is respectively acquired, a calibration baseline corresponding to the information about the angle of arrival of the user equipment relative to each reference base station is respectively determined, the three-dimensional location information is calibrated according to each calibration baseline, and three-dimensional location information obtained after the calibration is used as new three-dimensional location information of the user equipment, thereby further improving precision in positioning the user equipment.

The following describes an implementation process of step 204 in detail by using an example in which a neighboring base station of the serving base station calibrates the obtained three-dimensional location information of the user equipment:
As shown in FIG. 9, base station 1 is a serving base station and base station 2 is a neighboring base station of base station 1, where base stations 1 and 2 both have the three-dimensional spatial forming capability of the AAS; a direction of an AOA of the user equipment relative to base station 2 is used as a calibration baseline; in the established three-dimensional space coordinate system, a location point P1 corresponding to the three-dimensional location information of the user equipment is projected to the calibration baseline to obtain a calibration point P2; P1 is connected to P2; and three-dimensional location information of a midpoint P of the line segment P1P2 in the three-dimensional space coordinate system is acquired as new three-dimensional location information of the user equipment.

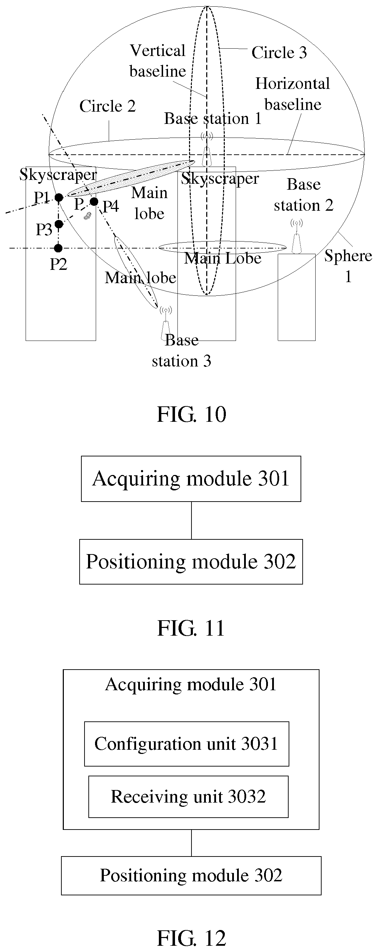

The following describes an implementation process of step 204 in detail by using an example in which two neighboring base stations of the serving base station calibrate the obtained three-dimensional location information of the user equipment:
As shown in FIG. 10, base station 1 is a serving base station and base station 2 and base station 3 are neighboring base stations of base station 1, where base station 1, base station 2, and base station 3 all have the three-dimensional spatial forming capability of the AAS; a direction of an AOA of the user equipment relative to base station 2 is used as a first calibration baseline and a direction of an AOA of the user equipment relative to base station 3 is used as a second calibration baseline;
in the established three-dimensional space coordinate system, a location point P1 corresponding to the three-dimensional location information of the user equipment is used as a first calibration point; P1 is projected to the first calibration baseline to obtain a current second calibration point P2; P1 is connected to P2; a midpoint P3 of the line segment P1P2 is acquired; and P3 is used as a current first calibration point; and
P3 is projected to the second calibration baseline to obtain a current second calibration point P4; P3 is connected to P4; three-dimensional location information of a midpoint P of the line segment P3P4 in the three-dimensional space coordinate system is acquired as a new three-dimensional location information of the user equipment.

If the number of neighboring base stations that participate in calibration and have the three-dimensional spatial forming capability of the AAS is greater than 2, for example, the number of neighboring base stations participating in calibration is 5, first, the serving base station is used to determine an initial location point P1; this initial point is projected to an AoA direction line of base station 2 to obtain P2; a midpoint P3 of P1P2 is acquired; P3 is projected to an AoA direction line of base station 3 to obtain P4; a midpoint P5 of P3P4 is acquired; P5 is projected to an AoA direction line of base station 4 to obtain P6; a midpoint P7 of P5P6 is acquired; P7 is projected to an AoA direction line of base station 5 to obtain P8; three-dimensional location information of a midpoint P of the line P7P8 in the three-dimensional space coordinate system is acquired as new three-dimensional location information of the user equipment.

Positioning can be performed to obtain three-dimensional location information of a user equipment by implementing a technical solution where a round trip time and information about an angle of arrival of the user equipment relative to a serving base station that serves the user equipment are acquired and positioning is performed to obtain the three-dimensional location information of the user equipment according to the round trip time and the information about the angle of arrival, so as to resolve a problem of accurately positioning the location of the user equipment in an urban environment full of skyscrapers. In addition, precision in positioning the user equipment can further be improved by acquiring an angle of arrival of the user equipment relative to a neighboring base station of the serving base station and calibrating the acquired three-dimensional location information of the user equipment.

### Embodiment 3

FIG. 11 shows a positioning server. The server is specifically the same as the positioning server in method embodiment 2 and includes an acquiring module 301 and a positioning module 302, where
the acquiring module 301 is configured to acquire a round trip time and information about an angle of arrival of a user equipment relative to a serving base station that serves the user equipment, where the information about the angle of arrival includes information about a horizontal angle of arrival and information about a vertical angle of arrival; and
the positioning module 302 is configured to perform positioning to obtain three-dimensional location information of the user equipment according to the round trip time and the information about the angle of arrival.

Specifically, the positioning module 302 includes:
a coordinate system establishment module, configured to establish a three-dimensional space coordinate system centered around a location of the serving base station;
a calculation module, configured to calculate a spatial distance between the user equipment and the serving base station according to the round trip time and a speed of signal propagation; and
a location determining module, configured to calculate horizontal location information of the user equipment in the three-dimensional space coordinate system according to the spatial distance and the information about the horizontal angle of arrival, and calculate vertical location information of the user equipment in the three-dimensional space coordinate system according to the spatial distance and the information about the vertical angle of arrival.

Referring to FIG. 12, in this embodiment of the present invention, when the acquiring module 301 is configured to acquire the information about the angle of arrival of the user equipment relative to the serving base station that serves the user equipment, the acquiring module 301 may specifically include:
a configuration unit 3031, configured to, when the serving base station supports a three-dimensional spatial forming capability of an active antenna system, configure the serving base station to measure the horizontal angle of arrival and the vertical angle of arrival of the user equipment relative to the serving base station; and
a receiving unit 3032, configured to receive the horizontal angle of arrival and the vertical angle of arrival, which are measured by the serving base station, of the user equipment relative to the serving base station.

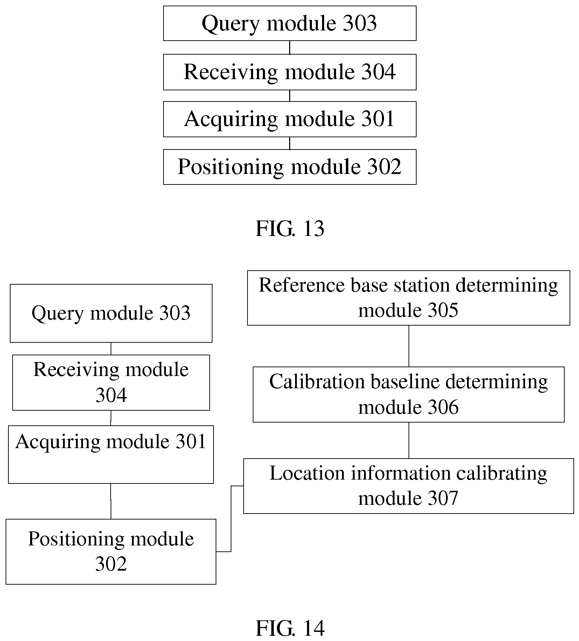

Referring to FIG. 13, in this embodiment of the present invention, the server may further include:
a query module 303, configured to deliver a query message to the serving base station to query whether the base station supports the three-dimensional spatial forming capability of the active antenna system; and
a receiving module 304, configured to receive a query response message returned by the serving base station, where the query response message feeds back whether the base station supports the three-dimensional spatial forming capability of the active antenna system.

Referring to FIG. 14, in this embodiment of the present invention, the server may further include:
a reference base station determining module 305, configured to determine one or more reference base stations;
a calibration baseline determining module 306, configured to respectively acquire information about an angle of arrival of the user equipment relative to each reference base station, and respectively determine a calibration baseline corresponding to the information about the angle of arrival of the user equipment relative to each reference base station; and
a location information calibrating module 307, configured to calibrate the three-dimensional location information according to each calibration baseline and use three-dimensional location information obtained after the calibration as new three-dimensional location information of the user equipment.

The reference base station determining module 305 includes: a detecting unit, configured to detect whether a neighboring base station of the serving base station supports the three-dimensional spatial forming capability of the active antenna system; and
a selecting unit, configured to use one or more neighboring base stations that support the three-dimensional spatial forming capability of the active antenna system as a reference base station.

The location information calibrating module 307 is specifically configured to project a location point corresponding to the three-dimensional location information to a calibration baseline to obtain a calibration point, and acquire three-dimensional location information of a midpoint, in the three-dimensional space coordinate system, of a line that connects the location point corresponding to the three-dimensional location information and the calibration point as the new three-dimensional location information of the user equipment.

The location information calibrating module 307 is further specifically configured to use the location point corresponding to the three-dimensional location information as a first calibration point and perform the following operations: project the first calibration point to an i^{th} calibration baseline to obtain a current second calibration point, where an initial value of i is 1; acquire a midpoint of a line connecting the first calibration point and the current second calibration point as a current first calibration point; increase i by 1; return to projecting the first calibration point to an i^{th} calibration baseline to obtain a current second calibration point; acquire a midpoint of a line connecting the first calibration point and the current second calibration point as a current first calibration point; increase i by 1 until i is greater than N; and use three-dimensional location information of the current first calibration point in the three-dimensional space coordinate system as the new three-dimensional location information of the user equipment.

Positioning can be performed to obtain three-dimensional location information of a user equipment by implementing a technical solution where a round trip time and information about an angle of arrival of the user equipment relative to a serving base station that serves the user equipment are acquired and positioning is performed to obtain the three-dimensional location information of the user equipment according to the round trip time and the information about the angle of arrival, so as to resolve a problem of accurately positioning the location of the user equipment in an urban environment full of skyscrapers. In addition, precision in positioning the user equipment can further be improved by acquiring an angle of arrival of the user equipment relative to a neighboring base station of the serving base station and calibrating the acquired three-dimensional location information of the user equipment.

A person of ordinary skill in the art may understand that all or a part of the steps of the foregoing embodiments may be implemented by hardware, or may be implemented by a program instructing relevant hardware. The program may be stored in a computer readable storage medium. The storage medium may be a read-only memory, a magnetic disk, or an optical disc.

The foregoing descriptions are merely exemplary embodiments of the present invention, but are not intended to limit the present invention. Any modification, equivalent replacement, or improvement made within the principle of the present invention shall fall within the protection scope of the present invention.

## Claims

1. A method for positioning a user equipment, wherein the method comprises:
acquiring (101) a round trip time and information about an angle of arrival of the user equipment relative to a serving base station that serves the user equipment, wherein the information about the angle of arrival comprises information about a horizontal angle of arrival included between an antenna beam and a horizontal reference line and information about a vertical angle of arrival included between an antenna beam and a vertical reference line; and
performing (102) positioning to obtain three-dimensional location information of the user equipment according to the round trip time and the information about the angle of arrival,
**characterized in that**
after the performing positioning to obtain three-dimensional location information of the user equipment according to the round trip time and the information about the angle of arrival, the method further comprises:
determining one or more reference base stations;
respectively acquiring information about an angle of arrival of the user equipment relative to each reference base station, and respectively determining a calibration baseline corresponding to the information about the angle of arrival of the user equipment relative to each reference base station; and
calibrating the three-dimensional location information according to each calibration baseline and using three-dimensional location information obtained after the calibration as new three-dimensional location information of the user equipment.

2. The method according to claim 1, wherein before the acquiring a round trip time and information about an angle of arrival of the user equipment relative to a serving base station that serves the user equipment, the method further comprises:
delivering a query message to the serving base station to query whether the base station supports a three-dimensional spatial forming capability of an active antenna system; and
receiving a query response message returned by the serving base station, wherein the query response message feeds back whether the base station supports the three-dimensional spatial forming capability of the active antenna system.

3. The method according to claim 1, wherein when the serving base station supports the three-dimensional spatial forming capability of the active antenna system, the acquiring information about an angle of arrival of the user equipment relative to a serving base station that serves the user equipment comprises:
configuring the serving base station to measure the horizontal angle of arrival and the vertical angle of arrival of the user equipment relative to the serving base station; and
receiving information about the horizontal angle of arrival, wherein the information is obtained by the serving base station by searching a table of horizontal angle of arrival information according to a measured value of the horizontal angle of arrival and reported by the serving base station, and receiving information about the vertical angle of arrival, wherein the information is obtained by the serving base station by searching a table of vertical angle of arrival information according to a measured value of the vertical angle of arrival and reported by the serving base station.

4. The method according to claim 1, wherein the performing positioning to obtain three-dimensional location information of the user equipment according to the round trip time and the information about the angle of arrival comprises:
establishing a three-dimensional space coordinate system centered around a location of the serving base station;
calculating a spatial distance between the user equipment and the serving base station according to the round trip time and a speed of signal propagation; and
calculating horizontal location information of the user equipment in the three-dimensional space coordinate system according to the spatial distance and the information about the horizontal angle of arrival, and calculating vertical location information of the user equipment in the three-dimensional space coordinate system according to the spatial distance and the information about the vertical angle of arrival.

5. The method according to claim 1, wherein the determining one or more reference base stations comprises:
detecting whether a neighboring base station of the serving base station supports a three-dimensional spatial forming capability of an active antenna system;
using one or more neighboring base stations that support the three-dimensional spatial forming capability of the active antenna system as a reference base station.

6. The method according to claim 1, wherein when there is one calibration baseline, the calibrating the three-dimensional location information according to each calibration baseline and using three-dimensional location information obtained after the calibration as new three-dimensional location information of the user equipment comprises:
projecting a location point corresponding to the three-dimensional location information to the calibration baseline to obtain a calibration point; and
acquiring three-dimensional location information of a midpoint, in the three-dimensional space coordinate system, of a line that connects the location point corresponding to the three-dimensional location information and the calibration point as the new three-dimensional location information of the user equipment.

7. The method according to claim 1, wherein when there are N calibration baselines, and N is a natural number greater than or equal to 2, the calibrating the three-dimensional location information according to each calibration baseline and using three-dimensional location information obtained after the calibration as new three-dimensional location information of the user equipment comprises:
using a location point corresponding to the three-dimensional location information as a first calibration point and performing the following operations:
projecting the first calibration point to an i^{th} calibration baseline to obtain a current second calibration point, wherein an initial value of i is 1; and
acquiring a midpoint of a line connecting the first calibration point and the current second calibration point as a current first calibration point, increasing i by 1, returning to projecting the first calibration point to an i^{th} calibration baseline to obtain a current second calibration point, acquiring a midpoint of a line connecting the first calibration point and the current second calibration point as a current first calibration point, increasing i by 1 until i is greater than N, and using three-dimensional location information of the current first calibration point in the three-dimensional space coordinate system as the new three-dimensional location information of the user equipment.

8. A positioning server, wherein the server comprises an acquiring module (301) and a positioning module (302), wherein
the acquiring module (301) is configured to acquire a round trip time and information about an angle of arrival of a user equipment relative to a serving base station that serves the user equipment, wherein the information about the angle of arrival comprises information about a horizontal angle of arrival included between an antenna beam and a horizontal reference line and information about a vertical angle of arrival included between an antenna beam and a horizontal reference line; and
the positioning module (302) is configured to perform positioning to obtain three-dimensional location information of the user equipment according to the round trip time and the information about the angle of arrival
**characterized in that**
the server further comprises:
a reference base station determining module (305), configured to determine one or more reference base stations;
a calibration baseline determining module (306), configured to respectively acquire information about an angle of arrival of the user equipment relative to each reference base station, and respectively determine a calibration baseline corresponding to the information about the angle of arrival of the user equipment relative to each reference base station; and
a location information calibrating module (307), configured to calibrate the three-dimensional location information according to each calibration baseline and use three-dimensional location information obtained after the calibration as new three-dimensional location information of the user equipment.

9. The server according to claim 8, wherein the server further comprises:
a query module (303), configured to deliver a query message to the serving base station to query whether the base station supports a three-dimensional spatial forming capability of an active antenna system; and
a receiving module (304), configured to receive a query response message returned by the serving base station, wherein the query response message feeds back whether the base station supports the three-dimensional spatial forming capability of the active antenna system.

10. The server according to claim 8, wherein when the acquiring module is configured to acquire the information about the angle of arrival of the user equipment relative to the serving base station that serves the user equipment, the acquiring module comprises:
a configuration unit (3031), configured to, when the serving base station supports the three-dimensional spatial forming capability of the active antenna system, configure the serving base station to measure the horizontal angle of arrival and the vertical angle of arrival of the user equipment relative to the serving base station; and
a receiving unit (3032), configured to configure the serving base station to measure the horizontal angle of arrival and the vertical angle of arrival of the user equipment relative to the serving base station.

11. The server according to claim 8, wherein the positioning module comprises:
a coordinate system establishment module, configured to establish a three-dimensional space coordinate system centered around a location of the serving base station;
a calculation module, configured to calculate a spatial distance between the user equipment and the serving base station according to the round trip time and a speed of signal propagation; and
a location determining module, configured to calculate horizontal location information of the user equipment in the three-dimensional space coordinate system according to the spatial distance and the information about the horizontal angle of arrival, and calculate vertical location information of the user equipment in the three-dimensional space coordinate system according to the spatial distance and the information about the vertical angle of arrival.

12. The server according to claim 8, wherein the reference base station determining module comprises: a detecting unit, configured to detect whether a neighboring base station of the serving base station supports a three-dimensional spatial forming capability of an active antenna system; and
a selecting unit, configured to use one or more neighboring base stations that support the three-dimensional spatial forming capability of the active antenna system as a reference base station.

13. The server according to claim 8, wherein the location information calibrating module is specifically configured to project a location point corresponding to the three-dimensional location information to a calibration baseline to obtain a calibration point, and acquire three-dimensional location information of a midpoint, in the three-dimensional space coordinate system, of a line that connects the location point corresponding to the three-dimensional location information and the calibration point as the new three-dimensional location information of the user equipment.

14. The server according to claim 8, wherein the location information calibrating module is specifically configured to use a location point corresponding to the three-dimensional location information as a first calibration point and perform the following operations: project the first calibration point to an i^{th} calibration baseline to obtain a current second calibration point, wherein an initial value of i is 1; acquire a midpoint of a line connecting the first calibration point and the current second calibration point as a current first calibration point; increase i by 1; return to projecting the first calibration point to an i^{th} calibration baseline to obtain a current second calibration point; acquire a midpoint of a line connecting the first calibration point and the current second calibration point as a current first calibration point; increase i by 1 until i is greater than N; and use three-dimensional location information of the current first calibration point in the three-dimensional space coordinate system as the new three-dimensional location information of the user equipment.

## Patentansprüche

1. Verfahren zum Positionieren eines Benutzergeräts, wobei das Verfahren aufweist:
Erfassen (101) einer Umlaufzeit und von Information über einen Ankunftswinkel des Benutzergeräts bezüglich einer versorgenden Basisstation, die das Benutzergerät versorgt, wobei die Information über den Ankunftswinkel Information über einen horizontalen Ankunftswinkel, der zwischen einem Antennenstrahl und einer horizontalen Referenzlinie eingeschlossen ist, und Information über einen vertikalen Ankunftswinkel aufweist, der zwischen einem Antennenstrahl und einer vertikalen Referenzlinie eingeschlossen ist; und
Ausführen (102) von Positionieren zum Erhalten von dreidimensionaler Ortsinformation des Benutzergeräts gemäß der Umlaufzeit und der Information über den Ankunftswinkel,
**dadurch gekennzeichnet, dass**,
nach dem Ausführen von Positionieren zum Erhalten von dreidimensionaler Ortsinformation des Benutzergeräts gemäß der Umlaufzeit und der Information über den Ankunftswinkel, das Verfahren ferner aufweist:
Bestimmen von einer oder mehr Basisstationen;
jeweiliges Erfassen von Information über einen Ankunftswinkel des Benutzergeräts bezüglich jeder Referenzbasisstation, und jeweiliges Bestimmen einer Kalibrationsgrundlinie, die der Information über den Ankunftswinkel des Benutzergeräts bezüglich jeder Referenzbasisstation entspricht; und
Kalibrieren der dreidimensionalen Ortsinformation gemäß jeder Kalibrationsgrundlinie und Nutzen von dreidimensionaler Ortsinformation, die nach der Kalibration erhalten wird, als neue dreidimensionale Ortsinformation des Benutzergeräts.

2. Verfahren nach Anspruch 1, wobei das Verfahre vor dem Erfassen einer Umlaufzeit und von Information über einen Ankunftswinkel des Benutzergeräts bezüglich einer versorgenden Basisstation, die das Benutzergerät versorgt, ferner aufweist:
Zuführen einer Abfragenachricht an die versorgende Basisstation zum Abfragen, ob die Basisstation eine dreidimensionale räumliche Ausbildungskapazität eines aktiven Antennensystems unterstützt; und
Empfangen einer Abfrageantwortnachricht, die durch die versorgende Basisstation zurückgeleitet wird, wobei die Abfrageantwortnachricht rückmeldet, ob die versorgende Basisstation die dreidimensionale räumliche Ausbildungskapazität des aktiven Antennensystems unterstützt.

3. Verfahren nach Anspruch 1, wobei, wenn die versorgende Basisstation die dreidimensionale räumliche Ausbildungskapazität des aktiven Antennensystems unterstützt, das Erfassen von Information über einen Ankunftswinkel des Benutzergeräts bezüglich einer versorgenden Basisstation, die das Benutzergerät versorgt, folgendes aufweist:
Konfigurieren der versorgenden Basisstation zum Messen des horizontalen Ankunftswinkels und des vertikalen Ankunftswinkels des Benutzergeräts bezüglich der versorgenden Basisstation; und
Empfangen von Information über den horizontalen Ankunftswinkel, wobei die Information durch die versorgende Basisstation durch Absuchen einer Tabelle von horizontaler Ankunftswinkelinformation gemäß einem gemessenen Wert des horizontalen Ankunftswinkels erhalten und durch die versorgende Basisstation gemeldet wird, und Empfangen von Information über den vertikalen Ankunftswinkel, wobei die Information durch die versorgende Basisstation durch Absuchen einer Tabelle von vertikaler Ankunftswinkelinformation gemäß einem gemessenen Wert des horizontalen Ankunftswinkels erhalten und durch die versorgende Basisstation gemeldet wird.

4. Verfahren nach Anspruch 1, wobei das Ausführen von Positionieren zum Erhalten von dreidimensionaler Ortsinformation des Benutzergeräts gemäß der Umlaufzeit und der Information über den Ankunftswinkel aufweist:
Einrichten eines dreidimensionalen Raumkoordinatensystems, das um einen Standort der versorgenden Basisstation zentriert ist;
Berechnen einer räumlichen Distanz zwischen dem Benutzergerät und der versorgenden Basisstation gemäß der Umlaufzeit und einer Signalverbreitungsgeschwindigkeit; und
Berechnen von horizontaler Ortsinformation des Benutzergeräts im dreidimensionalen Raumkoordinatensystem gemäß der räumlichen Distanz und der Information über den horizontalen Ankunftswinkel, und Berechnen von vertikaler Ortsinformation des Benutzergeräts im dreidimensionalen Raumkoordinatensystem gemäß der räumlichen Distanz und der Information über den vertikalen Ankunftswinkel.

5. Verfahren nach Anspruch 1, wobei das Bestimmen von einer oder mehr Referenzbasisstationen aufweist:
Erkennen, ob eine Nachbarbasisstation der versorgenden Basisstation eine dreidimensionale räumliche Ausbildungskapazität des aktiven Antennensystems unterstützt;
Benutzen von einer oder mehr Nachbarbasisstationen, die die dreidimensionale räumliche Ausbildungskapazität des aktiven Antennensystems unterstützen, als eine Referenzbasisstation.

6. Verfahren nach Anspruch 1, wobei, wenn eine Kalibrationsgrundlinie vorliegt, das Kalibrieren der dreidimensionalen Ortsinformation gemäß jeder Kalibrationsgrundlinie und Nutzen von dreidimensionaler Ortsinformation, die nach der Kalibration erhalten wird, als neue dreidimensionale Ortsinformation des Benutzergeräts aufweist:
Projizieren eines Ortspunkts, der der dreidimensionalen Ortsinformation entspricht, auf die Kalibrationsgrundlinie zum Erhalten eines Kalibrationspunkts; und
Erfassen von dreidimensionaler Ortsinformation eines Mittelpunkts, im dreidimensionalen Raumkoordinatensystem, einer Linie, die den Ortspunkt, der der dreidimensionalen Ortsinformation entspricht, und den Kalibrationspunkt verbindet, als die neue dreidimensionale Ortsinformation des Benutzergeräts.

7. Verfahren nach Anspruch 1, wobei, wenn N Kalibrationsgrundlinien vorliegen und N eine natürliche Zahl größer als oder gleich 2 ist, das Kalibrieren der dreidimensionalen Ortsinformation gemäß jeder Kalibrationsgrundlinie und Nutzen von dreidimensionaler Ortsinformation, die nach der Kalibration erhalten wird, als neue dreidimensionale Ortsinformation des Benutzergeräts aufweist:
Benutzen einer Ortspunkts, der der dreidimensionalen Ortsinformation entspricht, als einen ersten Kalibrationspunkt und Ausführen der folgenden Vorgänge:
Projizieren des ersten Kalibrationspunkts auf eine i-te Kalibrationsgrundlinie zum Erhalten eines derzeitigen zweiten Kalibrationspunkts, wobei ein Anfangswert von i 1 ist; und
Erfassen eines Mittelpunkts einer Linie, die den ersten Kalibrationspunkt und den derzeitigen zweiten Kalibrationspunkt verbindet, als einen derzeitigen ersten Kalibrationspunkt, Erhöhen von i um 1, Zurückkehren zum Projizieren des ersten Kalibrationspunkts auf eine i-te Kalibrationsgrundlinie zum Erhalten eines derzeitigen zweiten Kalibrationspunkts, Erfassen eines Mittelpunkts einer Linie, die den ersten Kalibrationspunkt und den derzeitigen zweiten Kalibrationspunkt verbindet, als einen derzeitigen ersten Kalibrationspunkt, Erhöhen von i um 1, bis i größer als N ist, und Nutzen von dreidimensionaler Ortsinformation des derzeitigen ersten Kalibrationspunkts im dreidimensionalen Raumkoordinatensystem als die neue dreidimensionale Ortsinformation des Benutzergeräts.

8. Positionierungsserver, wobei der Positionierungsserver ein Erfassungsmodul (301) und ein Positionierungsmodul (302) aufweist, wobei
das Erfassungsmodul (301) zum Erfassen einer Umlaufzeit und von Information über einen Ankunftswinkel des Benutzergeräts bezüglich einer versorgenden Basisstation, die das Benutzergerät versorgt, konfiguriert ist, wobei die Information über den Ankunftswinkel Information über einen horizontalen Ankunftswinkel, der zwischen einem Antennenstrahl und einer horizontalen Referenzlinie eingeschlossen ist, und Information über einen vertikalen Ankunftswinkel aufweist, der zwischen einem Antennenstrahl und einer vertikalen Referenzlinie eingeschlossen ist; und
das Positionierungsmodul (302) zum Ausführen von Positionieren zum Erhalten von dreidimensionaler Ortsinformation des Benutzergeräts gemäß der Umlaufzeit und der Information über den Ankunftswinkel konfiguriert ist,
**dadurch gekennzeichnet, dass** der Server ferner aufweist:
ein Referenzbasisstationsbestimmungsmodul (305), das zum Bestimmen von einer oder mehr Referenzbasisstationen konfiguriert ist;
ein Kalibrationsgrundlinienbestimmungsmodul (306), das zum jeweiligen Erfassen von Information über einen Ankunftswinkel des Benutzergeräts bezüglich jeder Referenzbasisstation und zum jeweiligen Bestimmen einer Kalibrationsgrundlinie, die der Information über den Ankunftswinkel des Benutzergeräts bezüglich jeder Referenzbasisstation entspricht, konfiguriert ist; und
ein Ortsinformationskalibrationsmodul (307), das zum Kalibrieren der dreidimensionalen Ortsinformation gemäß jeder Kalibrationsgrundlinie und Nutzen von dreidimensionaler Ortsinformation, die nach der Kalibration erhalten wird, als neue dreidimensionale Ortsinformation des Benutzergeräts konfiguriert ist.

9. Server nach Anspruch 8, wobei der Server ferner aufweist:
ein Abfragemodul (303), das zum Zuführen einer Abfragenachricht an die versorgende Basisstation zum Abfragen, ob die Basisstation eine dreidimensionale räumliche Ausbildungskapazität eines aktiven Antennensystems unterstützt, konfiguriert ist; und
ein Empfangsmodul (304), das zum Empfangen einer Abfrageantwortnachricht, die durch die versorgende Basisstation zurückgeleitet wird, konfiguriert ist, wobei die Abfrageantwortnachricht rückmeldet, ob die versorgende Basisstation die dreidimensionale räumliche Ausbildungskapazität des aktiven Antennensystems unterstützt.

10. Server nach Anspruch 8, wobei, wenn das Erfassungsmodul zum Erfassen von Information über einen Ankunftswinkel des Benutzergeräts bezüglich der versorgenden Basisstation, die das Benutzergerät versorgt, konfiguriert ist, das Erfassungsmodul folgendes aufweist:
eine Konfigurationseinheit (3031), die, wenn die versorgende Basisstation die dreidimensionale räumliche Ausbildungskapazität des aktiven Antennensystems unterstützt, zum Konfigurieren der versorgenden Basisstation zum Messen des horizontalen Ankunftswinkels und des vertikalen Ankunftswinkels des Benutzergeräts bezüglich der versorgenden Basisstation konfiguriert ist; und
eine Empfangseinheit (3032), die zum Konfigurieren der versorgenden Basisstation zum Messen des horizontalen Ankunftswinkels und des vertikalen Ankunftswinkels des Benutzergeräts bezüglich der versorgenden Basisstation konfiguriert ist.

11. Server nach Anspruch 8, wobei das Positionierungsmodul aufweist:
ein Koordinatensystemeinrichtungsmodul, das zum Einrichten eines dreidimensionalen Raumkoordinatensystems konfiguriert ist, welches um einen Standort der versorgenden Basisstation zentriert ist;
ein Berechnungsmodul, das zum Berechnen einer räumlichen Distanz zwischen dem Benutzergerät und der versorgenden Basisstation gemäß der Umlaufzeit und einer Signalverbreitungsgeschwindigkeit konfiguriert ist; und
ein Ortsbestimmungsmodul, das zum Berechnen von horizontaler Ortsinformation des Benutzergeräts im dreidimensionalen Raumkoordinatensystem gemäß der räumlichen Distanz und der Information über den horizontalen Ankunftswinkel und zum Berechnen von vertikaler Ortsinformation des Benutzergeräts im dreidimensionalen Raumkoordinatensystem gemäß der räumlichen Distanz und der Information über den vertikalen Ankunftswinkel konfiguriert ist.

12. Server nach Anspruch 8, wobei das Referenzbasisstationsbestimmungsmodul aufweist: eine Erkennungseinheit, die zum Erkennen konfiguriert ist, ob eine Nachbarbasisstation der versorgenden Basisstation eine dreidimensionale räumliche Ausbildungskapazität des aktiven Antennensystems unterstützt; und
eine Auswahleinheit, die zum Benutzen von einer oder mehr Nachbarbasisstationen, die die dreidimensionale räumliche Ausbildungskapazität des aktiven Antennensystems unterstützen, als eine Referenzbasisstation konfiguriert ist.

13. Server nach Anspruch 8, wobei das Ortsinformationskalibrationsmodul spezifisch zum Projizieren eines Ortspunkts, der der dreidimensionalen Ortsinformation entspricht, auf eine Kalibrationsgrundlinie zum Erhalten eines Kalibrationspunkts; und zum Erfassen von dreidimensionaler Ortsinformation eines Mittelpunkts, im dreidimensionalen Raumkoordinatensystem, einer Linie, die den Ortspunkt, der der dreidimensionalen Ortsinformation entspricht, und den Kalibrationspunkt verbindet, als die neue dreidimensionale Ortsinformation des Benutzergeräts konfiguriert ist.

14. Server nach Anspruch 8, wobei das Ortsinformationskalibrationsmodul spezifisch zum Benutzen einer Ortspunkts, der der dreidimensionalen Ortsinformation entspricht, als einen ersten Kalibrationspunkt und zum Ausführen der folgenden Vorgänge konfiguriert ist: Projizieren des ersten Kalibrationspunkts auf eine i-te Kalibrationsgrundlinie zum Erhalten eines derzeitigen zweiten Kalibrationspunkts, wobei ein Anfangswert von i 1 ist; Erfassen eines Mittelpunkts einer Linie, die den ersten Kalibrationspunkt und den derzeitigen zweiten Kalibrationspunkt verbindet, als einen derzeitigen ersten Kalibrationspunkt; Erhöhen von i um 1; Zurückkehren zum Projizieren des ersten Kalibrationspunkts auf eine i-te Kalibrationsgrundlinie zum Erhalten eines derzeitigen zweiten Kalibrationspunkts; Erfassen eines Mittelpunkts einer Linie, die den ersten Kalibrationspunkt und den derzeitigen zweiten Kalibrationspunkt verbindet, als einen derzeitigen ersten Kalibrationspunkt; Erhöhen von i um 1, bis i größer als N ist; und Nutzen von dreidimensionaler Ortsinformation des derzeitigen ersten Kalibrationspunkts im dreidimensionalen Raumkoordinatensystem als die neue dreidimensionale Ortsinformation des Benutzergeräts.

## Revendications

1. Procédé pour positionner un équipement utilisateur, dans lequel le procédé consiste :
à acquérir (101) un temps aller-retour et des informations concernant un angle d'arrivée de l'équipement utilisateur par rapport à une station de base de desserte qui dessert l'équipement utilisateur, dans lequel les informations concernant l'angle d'arrivée comportent des informations concernant un angle d'arrivée horizontal incluses entre un faisceau d'antenne et une ligne de référence horizontale ainsi que des informations concernant un angle d'arrivée vertical incluses entre un faisceau d'antenne et une ligne de référence verticale ; et
à réaliser (102) un positionnement pour obtenir des informations de localisation en trois dimensions de l'équipement utilisateur en fonction du temps aller-retour et des informations concernant l'angle d'arrivée,
**caractérisé en ce que**
après la réalisation d'un positionnement pour obtenir des informations de localisation en trois dimensions de l'équipement utilisateur en fonction du temps aller-retour et des informations concernant l'angle d'arrivée, le procédé consiste en outre :
à déterminer une ou plusieurs stations de base de référence ;
à acquérir respectivement des informations concernant un angle d'arrivée de l'équipement utilisateur par rapport à chaque station de base de référence et à déterminer respectivement une ligne de base d'étalonnage correspondant aux informations concernant l'angle d'arrivée de l'équipement utilisateur par rapport à chaque station de base de référence ; et
à étalonner les informations de localisation en trois dimensions en fonction de chaque ligne de base d'étalonnage et à utiliser des informations de localisation en trois dimensions obtenues après l'étalonnage comme nouvelles informations de localisation en trois dimensions de l'équipement utilisateur.

2. Procédé selon la revendication 1, dans lequel, avant l'acquisition d'un temps aller-retour et d'informations concernant un angle d'arrivée de l'équipement utilisateur par rapport à une station de base de desserte qui dessert l'équipement utilisateur, le procédé consiste :
à délivrer un message d'interrogation à la station de base de desserte pour demander si la station de base prend en charge une capacité de formation spatiale en trois dimensions d'un système d'antenne active ; et
à recevoir un message de réponse d'interrogation renvoyé par la station de base de desserte, dans lequel le message de réponse d'interrogation indique si la station de base prend en charge une capacité de formation spatiale en trois dimensions du système d'antenne active.

3. Procédé selon la revendication 1, dans lequel, lorsque la station de base prend en charge une capacité de formation spatiale en trois dimensions d'un système d'antenne active, l'acquisition des informations concernant un angle d'arrivée de l'équipement utilisateur par rapport à une station de base de desserte qui dessert l'équipement utilisateur, consiste :
à configurer la station de base de desserte pour mesurer l'angle d'arrivée horizontal et l'angle d'arrivée vertical de l'équipement utilisateur par rapport à la station de base de desserte ; et
à recevoir des informations concernant l'angle d'arrivée horizontal, dans lequel les informations sont obtenues par la station de base de desserte en recherchant une informations de table d'angle d'arrivée horizontal en fonction d'une valeur mesurée de l'angle d'arrivée horizontal et rapportée par la station de base de desserte, et à recevoir des informations concernant l'angle d'arrivée vertical, dans lequel les informations sont obtenues par la station de base de desserte en recherchant une informations de table d'angle d'arrivée vertical en fonction d'une valeur mesurée de l'angle d'arrivée vertical et rapportée par la station de base de desserte.

4. Procédé selon la revendication 1, dans lequel la réalisation d'un positionnement pour obtenir des informations de localisation en trois dimensions de l'équipement utilisateur en fonction du temps aller-retour et des informations concernant l'angle d'arrivée, consiste en outre :
à établir un système de coordonnées spatiales en trois dimensions centré autour d'une position de la station de base de desserte ;
à calculer une distance spatiale entre l'équipement utilisateur et la station de base de desserte en fonction du temps aller-retour et d'une vitesse de propagation du signal ; et
à calculer des informations de localisation horizontale de l'équipement utilisateur dans le système de coordonnées spatiales en trois dimensions en fonction de la distance spatiale et des informations concernant l'angle d'arrivée horizontal et à calculer des informations de localisation verticale de l'équipement utilisateur dans le système de coordonnées spatiales en trois dimensions en fonction de la distance spatiale et des informations concernant l'angle d'arrivée vertical.

5. Procédé selon la revendication 1, dans lequel la détermination d'une ou de plusieurs stations de base de référence consiste :
à détecter si une station de base voisine de la station de base de desserte prend en charge une capacité de formation spatiale en trois dimensions d'un système d'antenne active ;
à utiliser une ou plusieurs stations de base voisines qui prennent en charge la capacité de formation spatiale en trois dimensions du système d'antenne active comme station de base de référence.

6. Procédé selon la revendication 1, dans lequel, lorsqu'il y a une ligne de base d'étalonnage, l'étalonnage des informations de localisation en trois dimensions en fonction de chaque ligne de base d'étalonnage et l'utilisation d'informations de localisation en trois dimensions obtenues après l'étalonnage comme nouvelles informations de localisation en trois dimensions de l'équipement utilisateur consistent :
à projeter un point de localisation correspondant aux informations de localisation en trois dimensions sur la ligne de base d'étalonnage pour obtenir un point d'étalonnage ; et
à acquérir des informations de localisation en trois dimensions d'un point intermédiaire, dans le système de coordonnées spatiales en trois dimensions, d'une ligne qui relie le point de localisation correspondant aux informations de localisation en trois dimensions et le point d'étalonnage sous la forme de nouvelles informations de localisation en trois dimensions de l'équipement utilisateur.

7. Procédé selon la revendication 1, dans lequel, lorsqu'il y a N lignes de base d'étalonnage, et N est un nombre entier supérieur ou égal à 2, l'étalonnage des informations de localisation en trois dimensions en fonction de chaque ligne de base d'étalonnage et l'utilisation d'informations de localisation en trois dimensions obtenues après l'étalonnage comme nouvelles informations de localisation en trois dimensions de l'équipement utilisateur consistent :
à utiliser un point de localisation correspondant aux informations de localisation en trois dimensions comme premier point d'étalonnage et à effectuer les opérations suivantes consistant :
à projeter le premier point d'étalonnage sur une i^{ème} ligne de base d'étalonnage pour obtenir un second point d'étalonnage actuel, dans lequel une valeur initiale de i est 1 ; et
à acquérir un point intermédiaire d'une ligne reliant le premier point d'étalonnage et le second point d'étalonnage actuel en tant que premier point d'étalonnage actuel, à augmenter i de 1, à revenir à la projection du premier point d'étalonnage sur une i^{ème} ligne de base d'étalonnage pour obtenir un second point d'étalonnage actuel, à acquérir un point intermédiaire d'une ligne reliant le premier point d'étalonnage et le second point d'étalonnage actuel en tant que premier point d'étalonnage actuel, à augmenter i de 1 jusqu'à ce que i soit supérieur à N, et à utiliser des informations de localisation en trois dimensions du premier point d'étalonnage actuel dans l'espace de coordonnées spatiales en trois dimensions comme nouvelles informations de localisation en trois dimensions de l'équipement utilisateur.

8. Serveur de positionnement, dans lequel le serveur comprend un module d'acquisition (301) et un module de positionnement (302), dans lequel le module d'acquisition (301) est configuré pour acquérir un temps aller-retour et des informations concernant un angle d'arrivée d'un équipement utilisateur par rapport à une station de base de desserte qui dessert l'équipement utilisateur, dans lequel les informations concernant l'angle d'arrivée comportent des informations concernant un angle d'arrivée horizontal incluses entre un faisceau d'antenne et une ligne de référence horizontale ainsi que des informations concernant un angle d'arrivée vertical incluses entre un faisceau d'antenne et une ligne de référence verticale ; et
le module de positionnement (302) est configuré pour réaliser un positionnement pour obtenir des informations de localisation en trois dimensions de l'équipement utilisateur en fonction du temps aller-retour et des informations concernant l'angle d'arrivée,
**caractérisé en ce que**
le serveur comprend en outre :
un module de détermination de station de base de référence (305), configuré pour déterminer une ou plusieurs stations de base de référence ;
un module de détermination de ligne de base d'étalonnage (306), configuré pour acquérir respectivement des informations concernant un angle d'arrivée de l'équipement utilisateur par rapport à chaque station de base de référence et pour déterminer respectivement une ligne de base d'étalonnage correspondant aux informations concernant l'angle d'arrivée de l'équipement utilisateur par rapport à chaque station de base de référence ; et
un module d'étalonnage d'informations de localisation (307), configuré pour étalonner les informations de localisation en trois dimensions en fonction de chaque ligne de base d'étalonnage et pour utiliser des informations de localisation en trois dimensions obtenues après l'étalonnage comme nouvelles informations de localisation en trois dimensions de l'équipement utilisateur.

9. Serveur selon la revendication 8, dans lequel le serveur comprend en outre :
un module d'interrogation (303), configuré pour délivrer un message d'interrogation à la station de base de desserte pour demander si la station de base prend en charge une capacité de formation spatiale en trois dimensions d'un système d'antenne active ; et
un module de réception (304), configuré pour recevoir un message de réponse d'interrogation renvoyé par la station de base de desserte, dans lequel le message de réponse d'interrogation indique si la station de base prend en charge une capacité de formation spatiale en trois dimensions du système d'antenne active.

10. Serveur selon la revendication 8, dans lequel, lorsque le module d'acquisition est configuré pour acquérir les informations concernant l'angle d'arrivée de l'équipement utilisateur par rapport à la station de base de desserte qui dessert l'équipement utilisateur, le module d'acquisition comprend :
une unité de configuration (3031), configurée, lorsque la station de base prend en charge la capacité de formation spatiale en trois dimensions du système d'antenne active, pour configurer la station de base de desserte pour mesurer l'angle d'arrivée horizontal et l'angle d'arrivée vertical de l'équipement utilisateur par rapport à la station de base de desserte ; et
une unité de réception (3032), configurée pour configurer la station de base de desserte pour mesurer l'angle d'arrivée horizontal et l'angle d'arrivée vertical de l'équipement utilisateur par rapport à la station de base de desserte.

11. Serveur selon la revendication 8, dans lequel le module de positionnement comprend :
un module d'établissement de système de coordonnées, configuré pour établir un système de coordonnées spatiales en trois dimensions centré autour d'une position de la station de base de desserte ;
un module de calcul, configuré pour calculer une distance spatiale entre l'équipement utilisateur et la station de base de desserte en fonction du temps aller-retour et d'une vitesse de propagation du signal ; et
un module de détermination de position, configuré pour calculer des informations de localisation horizontale de l'équipement utilisateur dans le système de coordonnées spatiales en trois dimensions en fonction de la distance spatiale et des informations concernant l'angle d'arrivée horizontal et pour calculer des informations de localisation verticale de l'équipement utilisateur dans le système de coordonnées spatiales en trois dimensions en fonction de la distance spatiale et des informations concernant l'angle d'arrivée vertical.

12. Serveur selon la revendication 8, dans lequel le module de détermination de station de base de référence comprend : une unité de détection, configurée pour détecter si une station de base voisine de la station de base de desserte prend en charge une capacité de formation spatiale en trois dimensions d'un système d'antenne active ; et une unité de sélection, configurée pour utiliser une ou plusieurs stations de base voisines qui prennent en charge la capacité de formation spatiale en trois dimensions du système d'antenne active comme station de base de référence.

13. Serveur selon la revendication 8, dans lequel le module d'étalonnage d'informations de localisation est spécialement configuré pour projeter un point de localisation correspondant aux informations de localisation en trois dimensions sur la ligne de base d'étalonnage pour obtenir un point d'étalonnage, et pour acquérir des informations de localisation en trois dimensions d'un point intermédiaire, dans le système de coordonnées spatiales en trois dimensions, d'une ligne qui relie le point de localisation correspondant aux informations de localisation en trois dimensions et le point d'étalonnage sous la forme de nouvelles informations de localisation en trois dimensions de l'équipement utilisateur.

14. Serveur selon la revendication 8, dans lequel le module d'étalonnage d'informations de localisation est spécialement configuré pour utiliser un point de localisation correspondant aux informations de localisation en trois dimensions comme premier point d'étalonnage et pour effectuer les opérations suivantes consistant : à projeter le premier point d'étalonnage sur une i^{ème} ligne de base d'étalonnage pour obtenir un second point d'étalonnage actuel, dans lequel une valeur initiale de i est 1 ; à acquérir un point intermédiaire d'une ligne reliant le premier point d'étalonnage et le second point d'étalonnage actuel en tant que premier point d'étalonnage actuel ; à augmenter i de 1 ; à revenir à la projection du premier point d'étalonnage sur une i^{ème} ligne de base d'étalonnage pour obtenir un second point d'étalonnage actuel ; à acquérir un point intermédiaire d'une ligne reliant le premier point d'étalonnage et le second point d'étalonnage actuel en tant que premier point d'étalonnage actuel ; à augmenter i de 1 jusqu'à ce que i soit supérieur à N ; et à utiliser des informations de localisation en trois dimensions du premier point d'étalonnage actuel dans l'espace de coordonnées spatiales en trois dimensions comme nouvelles informations de localisation en trois dimensions de l'équipement utilisateur.
